# EUROPEAN PATENT APPLICATION

(11) **EP 4 144 499 A1**
(43) Date of publication of application: **08.03.2023**
(21) Application number: 21195082.9
(22) Date of filing: 06.09.2021
(51) Int. Cl.: B29C 45/00, B29C 45/14, B29C 45/27, H02K 1/27, H02K 15/03, B29C 45/02, B29L 31/08, B29L 31/34

(54) **ONE-SHOT OVERMOLDING OF A ROTOR FOR AN ELECTRIC MOTOR**

(71) Applicant: MAHLE International GmbH, 70376 Stuttgart (DE)
(72) Inventor: SEVER, Peter, 9000 Murska Sobota (SI); MALE, Tim, Telford, TF3 2 BX (GB)
(74) Representative: BRP Renaud & Partner mbB Rechtsanwälte Patentanwälte Steuerberater

(57) **Abstract**

The invention relates to a rotor of electric motor and to a method of manufacturing the same. The rotor comprising a shaft, a rotor core, a plurality of magnets (4), and a resin being used for fixation of the magnets (4) within the rotor core.

According to the invention, a manifold (3G) on a front surface of the rotor core is used to provide an overlapping surface area for a plurality of the cavities within the rotor core. Advantageously the number of the gates (5B-G) within the tool is significantly reduced. In an advantageous embodiment, a plurality of the blades on the front surface of the rotor core is manufactured by filling up the manifold (3G) cavity further comprising the impeller (3B) for oil-cooled rotor.

## Description

The main object of the invention relates to the methods and apparatus for manufacturing the rotor of electric motor for traction drive of an electric vehicle. Methods for overmolding - fixation of magnets in the slots of the rotor core for electric motor are well known from the prior art. EP1921734B1 discloses a method for fixation of magnets, whereby the molten resin is injected into the slots of the rotor core with installed magnets through a die having a plurality of cylinders, each matching the position of the target receiving slot in rotor core, thus the resin is injected into individual slots through communication area (i.e. gate) between each cylinder and the slot of the rotor core.

In known solutions, the resin is injected into the slots of the rotor core through a plurality of gates within a die (i.e. tool used for overmolding), where each gate is at least partially overlapping with the area of the target slot to be filled with the resin, and thus a complex runner system within the tool is required for injecting the resin where a significant amount of material is being wasted.

It is therefore the object of the present invention to provide an improved or at least alter-native embodiment of the method described, in which disadvantages described are overcome.

This object is solved according to the invention by the object of independent claim 1. Advantageous embodiments are the subject of the dependent claims.

The present invention is based on the general idea to use additional features of the rotor, like impeller for forced oil cooling of the electric motor, where the volume of the impeller being manufactured by rotor overmolding is also used in the function of the runner system for the tool being used for overmolding at least on one side of the rotor to minimize the number of the gates for injecting the resin during overmolding process and thereby to improve the utilization of used material and reduce the costs of the finished rotor.

In the present invention, the compound term "first/second" is used to simplify the description. In the context of the present invention, the individual terms "first" and "second" of the compound term "first/second" are always linked with an "and/or". Thus, in the rotor, the "first" element and/or the "second" element may be present. In this case, the respective "first" element is exclusively associated with a further "first" element of the rotor or the first axial end of the rotor, and the respective "second" element is exclusively associated with a further "second" element of the rotor or the second axial end of the rotor. Where the individual terms "first" and "second" are not used in the composite term "first/second", they are to be understood in accordance with this usage. Moreover, in the present invention, the terms "axial" and "radial" always refer to the axis of rotation.

The Rotor of the electric motor comprises a shaft and a rotor core. The shaft can be a solid or hollow steel bar and/or tube, adapted to receive rotor core in place once assembled.

The shaft in an advantageous embodiment comprises a main part to receive the rotor core in place, and a supporting part, with which, when assembled, the main part forms a hollow shaft of the rotor. The rotor core comprises a cylindrical body comprising an adjacent front surface on the first side of the rotor core and an adjacent front surface on a second - opposite - side of the rotor core respectively. Furthermore, the rotor core comprises a plurality of permanent magnets and a plurality of a laminated sheets (hereinafter sheets), being circular in shape, and made of electric steel. Each of the sheets further comprises a central aperture and a plurality of cutouts according to the electromagnetic and mechanical design of the rotor, wherein not all the sheets within the stack and/or core must be the same. The sheet, and thus also the stack of the rotor core comprises a plurality of circular and/or custom shaped cutouts and/or grooves for receiving the magnets in place, for reducing the weight of the rotor core, and for limiting the magnetic flux within the rotor stack and/or rotor core. The sheets are stacked together into a stack, being cylindrical in shape and having a central aperture along its central axis to receive the shaft in place. The assembled stack comprises a plurality of magnets being inserted in target slots. The rotor core comprises one or a plurality of stacks, wherein the stacks within the rotor core are coaxial and positioned in a straight line, helical pattern, or in shifted position, where individual stacks are being skewed around the central axis in various patterns. When rotor core comprises two or more stacks being shifted, more precisely, being rotated around the central axis of the rotor and moved along the central axis to provide a stator core, the overlapping area of the first and second stack, more precisely, the overlapping surface area of the slot in a first and corresponding slot in the second stack is at least 3 (three) times bigger than the biggest size of a filler within a resin intended to be used for overmolding the rotor, but not smaller than 0,03mm^2. Advantageously, this allows a segmentation and skewing of the stacks within the rotor core with evident benefits for electromagnetic performance.

Accordingly, a high-performance state of the art rotor stack and/or rotor core comprises a plurality of cavities and/or slots, thus the number of the gates in die to be used for overmolding the rotor is not practical anymore, wherein a significant amount of material being used for overmolding (hereinafter a resin) is wasted.

The present invention proposes a manifold to be used as part of a runner system, where resin is introduced and essentially distributed over a limited area on the front surface of the first stack, at least on the first side of the rotor core. Similarly, the front surface of the first stack on the other side of the rotor core comprises a similar or the same manifold structure where the resin is distributed by the principle of pressure redistribution within the cavity of the die used for manufacturing the manifold, thus the risk for voids within overmolding structure within rotor core is significantly reduced. Advantageously, the manifold on at least one side of the rotor core is used to inject the resin in all target slots of the first rotor stack, wherein the resin is injected from a die as part of the tool used for over-molding process utilization, and fed into the manifold through a gate, where the number of the gates in the advantageous embodiment is in the range between 1 and 30, and wherein the number of the gates is preferably equal to the number of the rotor poles. Advantageously, the manifold is used as a buffer for introducing the resin into the rotor core, hence the location of the gate and distance between the gate within die and target elements (i.e. magnets in slots) is not critical anymore, wherein the flow of the resin penetrates through all the stacks within the rotor core by a single, one-shot overmolding process, and wherein the number of the gates is kept as low as reasonable.

The manifold on the front surface of the first stack and/or on the front surface of the first stack on the other side of the rotor core is essentially formed as a cylindrical body in form of a ring, where the size and shape of the manifold are adapted to the limitations of target areas to be overmolded, wherein all target slots of at least first stack are at least partially overlapping with the size and shape of the manifold, and wherein the area of the individual overlapping surface between manifold and corresponding target slot and/or cavity and/or hole within the first stack is at least 3 (three) times bigger than the biggest size of a filler within the resin intended to be used for overmolding the rotor, but not smaller than 0,03mm^2. Similarly, the thickness of the manifold is at least 3 (three) times bigger than the biggest size of a filler within the resin intended to be used for over-molding the rotor, however, preferably in the range between 0,05mm and 50mm.

In an advantageous further embodiment, the manifold comprises a plurality of blades, protruding away from the front surface of the first stack and/or rotor core, wherein the back wall of the manifold is raised and transformed into a concave shape with the aim to provide an impeller or a fan, where the blades are spaced apart from each other and together form a first/second impeller of the rotor. Advantageously, this allows for the rotor of the electric motor to operate as a fan/and or as a pump for propelling the coolant through the cooling system of the electric motor, wherein the coolant is air, dielectric fluid (i.e. oil), or a mixture of air and dielectric fluid.

For overmolding of the rotor core comprising a plurality of sheets, it is essential, that the sheets within one and/or within the plurality of rotor stacks of the rotor core are clamped in the axial direction with the aim to prevent the leakage of the resin during overmolding process utilization, wherein degassing of the closed cavities within the tool is preferably achieved through the gaps between the sheets of the rotor stack, where exists the irregularities and imperfection within rolled sheets of material on the level between 0,001mm and 0,05mm, preferably below 0,02mm. Alter-natively, the clamping surface and/or the tool used for overmolding comprises at least one or a plurality of degassing apertures for venting the tool during the overmolding process with the aim to avoid over pressurizing the tool. Accordingly, the advantageous embodiment of the manifold comprises an offset distance in regard to the sheet outer diameter and sheet inner diameter, where clamping force is applied by the die being part of the tooling used for overmolding at least during the overmolding process, wherein the clamping force is applied until the resin is not solidified and at least partially cured. If required, in the advantageous embodiment the manifold comprises additional apertures or grooves generated by a corresponding supporting structure within the die of tool used for overmolding. Advantageously the clamping area on the front surface of the first stack on the first side of the rotor core and/or front surface of the first stack on the second side of the rotor core is distributed over a larger area to avoid leakage of resin, whilst reducing the risk of permanent deformation of the sheet and/or rotor core during overmolding process.

For overmolding utilization, the advantageous embodiment comprises a tooling, wherein at least one die is used to form a manifold within the process of over-molding utilization. The die comprises a cavity in form of a negative volume of manifold, wherein the die further comprises at least one cylinder in shape of a ring around the central axis into which the resin is introduced in a softened state by raising the temperature of raw material to the target temperature to be used for the overmolding process utilization. Advantageously the die in an area of the cavity for manifold creation is connected with the cylinder for introducing the resin by the communication path considered to the gate within the tool for injecting the resin in a molten state into the cavities of the tool comprising the rotor core. The resin is being molten into the liquid state within the cylinder by applying the pressure provided by the corresponding plunger of the tool for injecting the resin into the manifold, advantageously in all target slots and cavities within the rotor core.

To achieve the above purpose, the present invention exhibits the following characteristics, wherein a method of rotor overmolding in best mode embodiment comprises the steps of:
1. Stacking the plurality of sheets into at least one stack, wherein each stack comprises a plurality of target slots for inserting the magnets, and slots for limiting the magnetic flux within the rotor core, wherein the nominal height of the rotor core is achieved by providing a nominal height of individual stack height, being controlled and adapted by adding the sheets, or by removing the sheets within the individual stack to achieve the target height of the stack and/or nominal height of the rotor core. Within the stacking process, the sheets of the individual stack in the advantageous embodiment are at least aligned to meet the required tolerance of the slot for insertion of the magnets.
2. Insertion of magnets into the target slots within the individual stack, wherein the magnets in advantageously embodiment are in a magnetized state. Alternatively, the magnets are being magnetized after the overmolding process is finished.
3. Aligning the sheets within the stack, wherein the sheets are aligned in regard to the central aperture of the stack by at least one datum feature (i.e. groove) on the sheet, preferably located on the outer and/or inner contour of the sheet.
4. Clamping the sheets within the stack by providing a clamping force on the first and second end of the stack. The clamping force is in the range between 10kN and 500kN, preferably 150kN. Advantageously, the imperfections on sheets as the result of the stamping process for cutting the blades are minimized.
5. Installing the stack in the clamped state and/or in the clamped condition on the shaft by means of loose fit, transition fit, or interference fit connection. In an advantageous embodiment the press-fit connection is used, where the sheets within the stack and/or rotor core are fixed by position on the shaft. However, at least during the rotor overmolding process, the clamping force acting on the stack and/or rotor core is reinitiated by the tool used for overmolding with the aim to prevent the leakage of the resin between the sheets, wherein the sheets within the stack are positioned on the shaft are constrained by the interference fit with the shaft, hence they can essentially move only along the central axis once the clamping force is applied. The compression and/or reduction of the stack height during the compression provided by the clamping force within the overmolding tool is in the range between 0,1% and 10% of complete stack height, advantageously smaller than 5% of complete stack height.
6. Preheating the rotor core. In an advantageous embodiment, the rotor core is preheated whilst installed on the shaft.
7. Preheating the tool for receiving the rotor core in place for rotor overmolding utilization.
8. Preheating the resin.
9. Installing the rotor core into the tool for overmolding
10. Aligning the rotor core in respect to the overmolding tool, wherein in the advantageous embodiment the portion of the shaft comprising highly accurately machined (i.e. grinded) seats for installing the bearings in place is used for aligning the tool in respect to the rotor core, where loose fit or transition fit is established. In the advantageous embodiment, the transition fit is used, where diametrical interference is in the range between 0,005mm and 0,015mm, preferably 0,0075mm.
11. Compressing the rotor core with the tool used for overmolding by applying the target clamping force in the range between 10kN and 500kN, preferably 100kN.
12. Introducing the resin into the cylinder of the tool, wherein the cavity of the cylinder is in communication through at least one gate with the cavity of at least one manifold provided and/or created by the tool and front surface of the first stack on the first side of the rotor core and/or front surface of the first stack on the second side of the rotor core.
13. Injecting the resin in molten and/or fluidized state by a single shot into at least one manifold provided and/or created by the tool and front surface of the first stack on the first side of the rotor core and/or front surface of the first stack on the second side of the rotor core, wherein the resin in the cylinder is molten and/or fluidized by pressure provided with axial movement of the tool further comprising a plunger, corresponding to the tool cylinder with inserted resin. It is essential to notice, that the resin within the manifold is redistributed among overlapping apertures and/or cavities by s principle of pressure distribution until the complete cavity is filled up with the resin.
14. Holding the clamping force and overmolding parameters until the resin injected into the manifold, therefore also injected into all target slots and cavities within the rotor core, is at least partially solidified and cured.
15. Opening the tool, where the tool used for overmolding is opened by axial movement of the tool.
16. Ejecting the overmolded rotor out of the tool being used for overmolding, wherein advantageously the waste of the resin is minimized by using manifold for single shot overmolding.

Further important features and advantages of the invention are apparent from the subclaims, from the drawings, and from the accompanying figure description based on the drawings.

It is understood that the above features and those to be explained below can be used not only in the combination indicated in each case, but also in other combinations or on their own, without departing from the scope of the present invention.

Preferred embodiments of the invention are shown in the drawings and will be explained in more detail in the following description, wherein identical reference signs refer to identical or similar or functionally identical components.

It shows, each schematically
- Fig. 1: an isometric view of a rotor for an electric motor according to the invention in a first embodiment;
- Fig. 2: a side view of the rotor for the electric motor according to the invention in the first embodiment;
- Fig. 3: a sectional view of the rotor for the electric motor according to the invention in the first embodiment;
- Fig. 4: a detailed sectional view of the rotor for the electric motor according to the invention in the first embodiment;
- Fig. 5: an another sectional view of the rotor for the electric motor according to the invention in the first embodiment;
- Fig. 6: a detailed sectional view of the rotor for the electric motor according to the invention in the first embodiment;
- Fig. 7: an isometric view of a rotor for the electric motor according to the invention in an alternative embodiment;
- Fig. 8: an isometric view of a rotor for the electric motor according to the invention in an another alternative embodiment;
- Fig. 9: an isometric view of a rotor for the electric motor according to the invention in an another alternative embodiment;
- Fig. 10: a top view of the rotor for the electric motor according to the invention in the alternative embodiment;
- Fig. 11: an isometric view of the rotor for the electric motor according to the invention, wherein some elements of the rotor are hidden for sake of representative explanation.

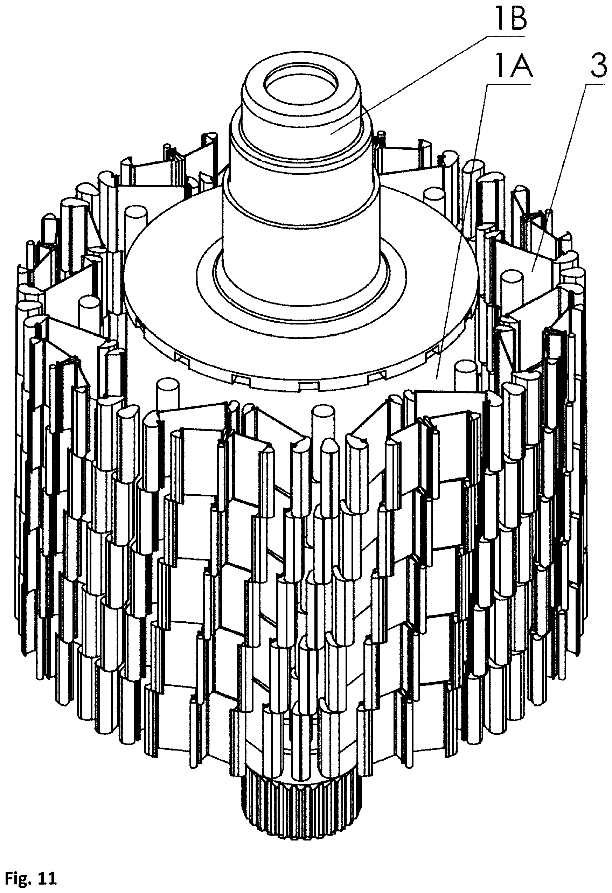

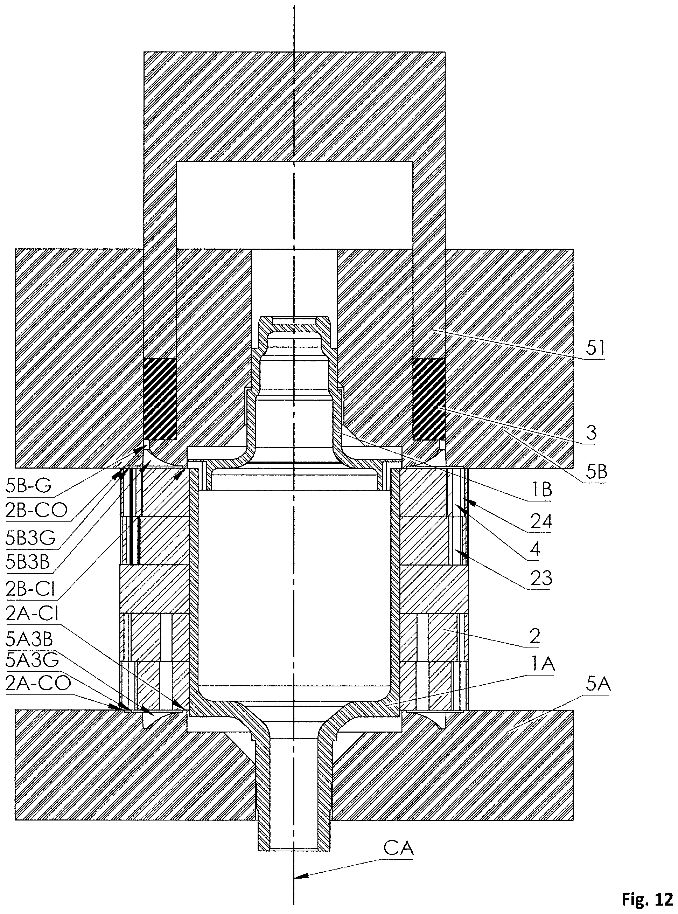

- Figs. 11 and 12: a sectional views of the rotor for the electric motor according to the invention in the first embodiment.

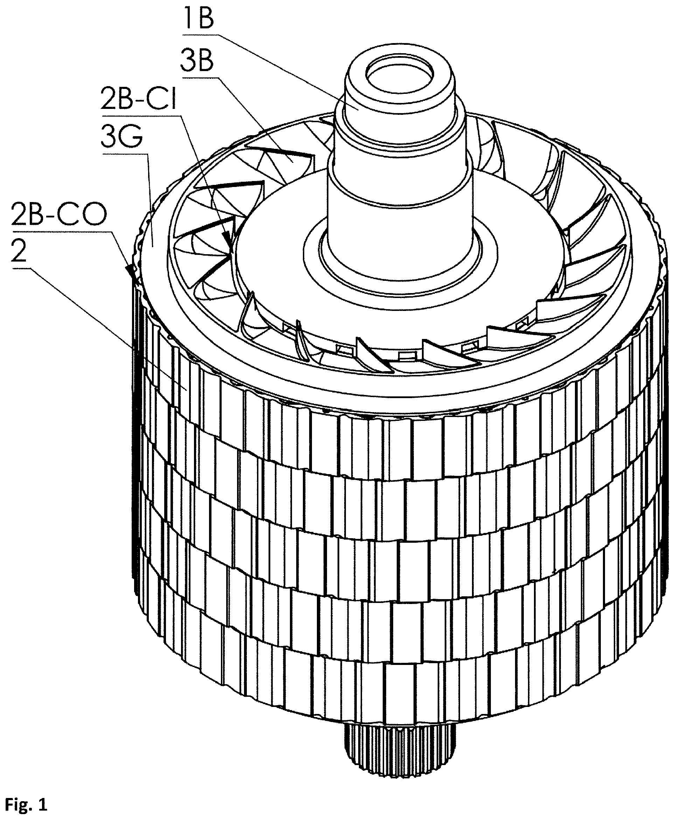

Fig. 1 shows an isometric view of an overmolded rotor for an electric motor according to the invention in a first embodiment. The rotor comprises a shaft and a rotor core, and a corresponding central axis CA. In Fig. 1, a manifold 3G made out of a resin 3 as proposed by the invention is visible, wherein the manifold 3G in best mode embodiment further comprises the elements of an impeller 3B.

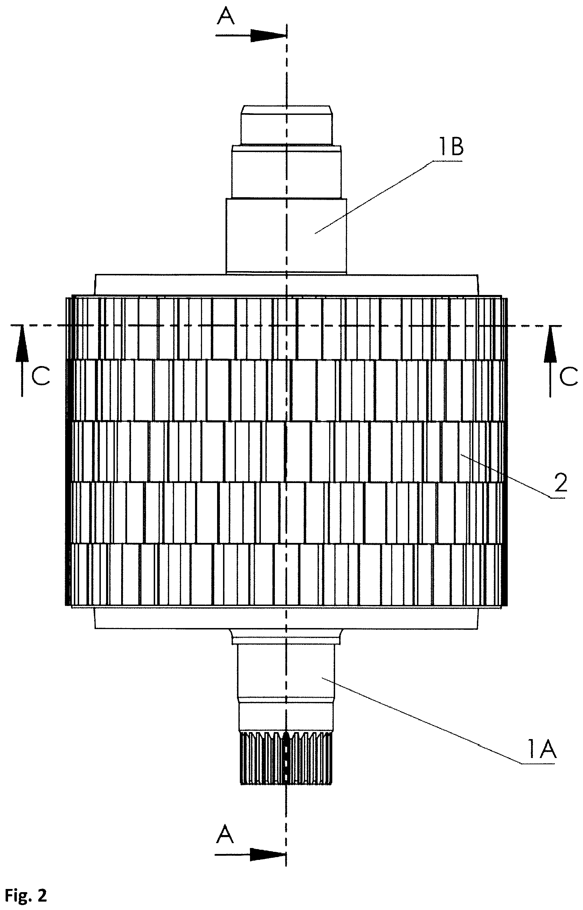

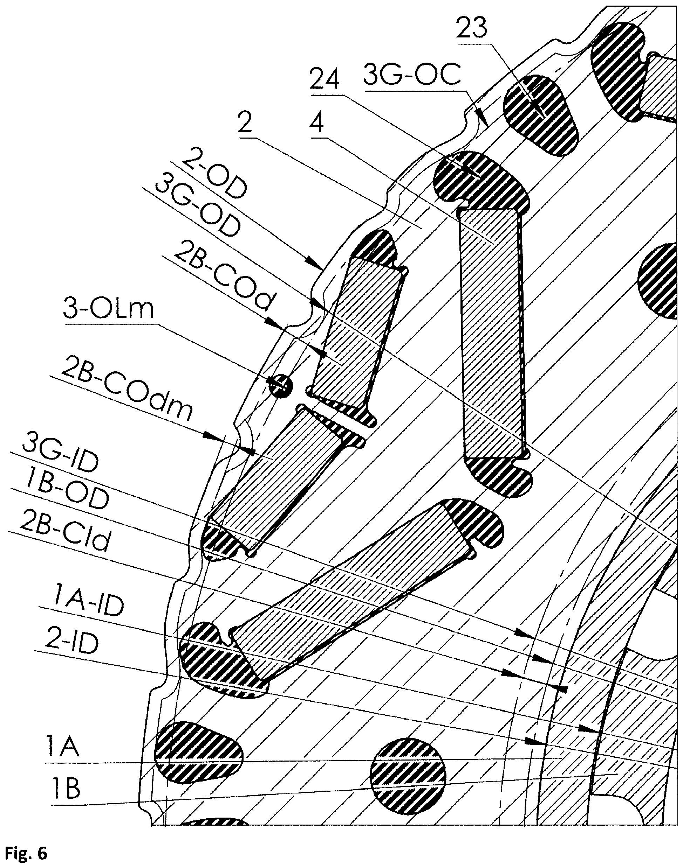

Fig. 2 shows a side view of the rotor for the electric motor according to the invention in the first embodiment, where a plane for sectional view A-A, and a plane for sectional view C-C are indicated. The shaft in advantageous embodiment is a two-part hollow shaft, comprising a shaft core 1A, further comprising splined area for transmission, and main shaft portion in form of a tube, where the rotor core is installed in place. Furthermore, the shaft comprises a supporting body 1B being attached to the shaft core with press fit connection, wherein main core 1A and supporting body 1B comprises additional features, comprising the seats for the bearing, wherein the seats are manufactured with tight tolerance by turning and/or grinding. The rotor core comprises a plurality of magnets 4 (not shown in Fig. 2, cf. Fig. 6) and a plurality, in more particular, five stacks 2. The stack 2 comprises a plurality of laminated sheets made out of electric steel, wherein each sheet comprises a plurality of cutouts with aim to provide a plurality of cavities within the stack 2, the cavities comprising a group of a magnet slots 24 (not shown in Fig. 2, cf. Fig. 6) within the stack 2 for inserting the magnets 4 in place, and group of a fixation slots 23 for limiting the magnetic flux within the stack 2 and/or for reducing the weight of the rotor stack 2. The stacks of the rotor core are positioned on the shaft core 1A in a linear pattern along the central axis CA, wherein the stacks 2 are skewed around the central axis CA in the one-directional pattern for sake of preferred electromagnetic design.

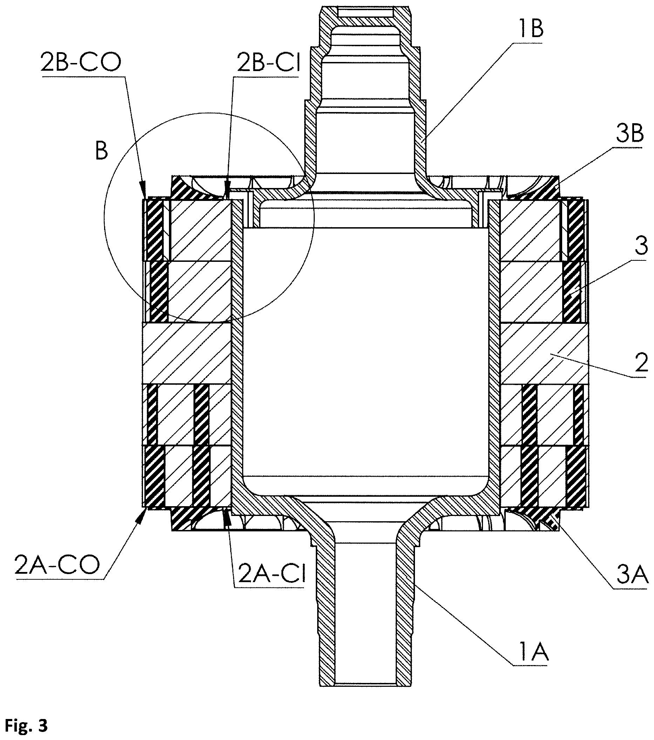

Fig. 3 shows the sectional view A-A of the rotor for the electric motor according to the invention in the first embodiment, where the area of a detailed view B is indicated. The rotor core comprises a front surface of the first stack 2 on the side of the shaft core 1A, and a front surface of the first stack 2 on the side of the supporting body 1B.

On exemplary best mode embodiment, the front surface of the first stack 2 on the side of the shaft core 1A comprises a first outer clamping surface 2A-CO, located in the area of the outer peripheral edge of the rotor stack 2, and first inner clamping surface 2A-CI, located in the area of the inner edge of the rotor stack 2. Similarly, the front surface of the first stack 2 on the side of the shaft supporting body 1A comprises a first outer clamping surface 2B-CO, located in the area of the outer peripheral edge of the rotor stack 2, and first inner clamping surface 2B-CI, located in the area of the inner edge of the rotor stack 2, hence the area of the manifold 3G is limited in radial direction by corresponding clamping areas on the front surface of the stack 2 and/or the features of the shaft.

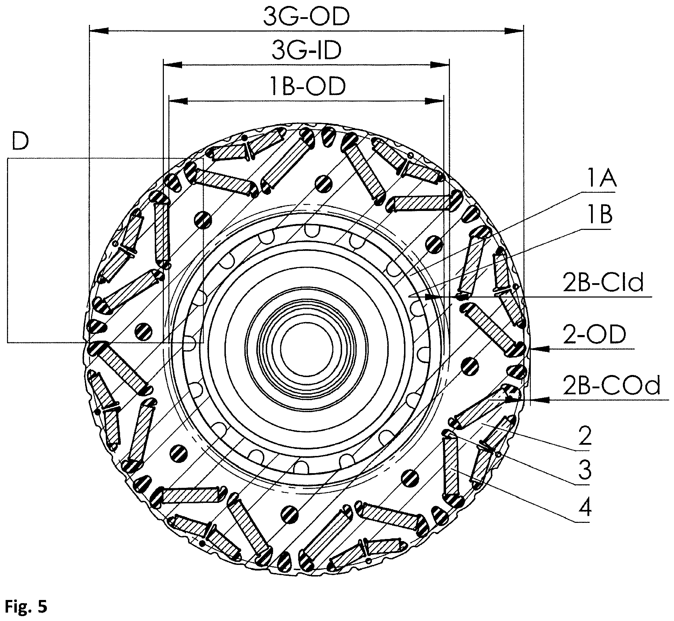

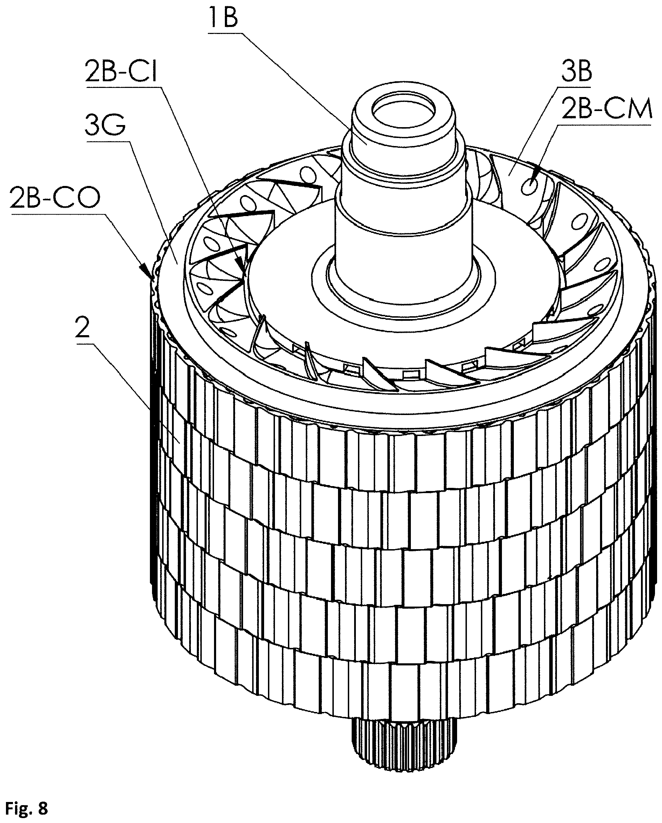

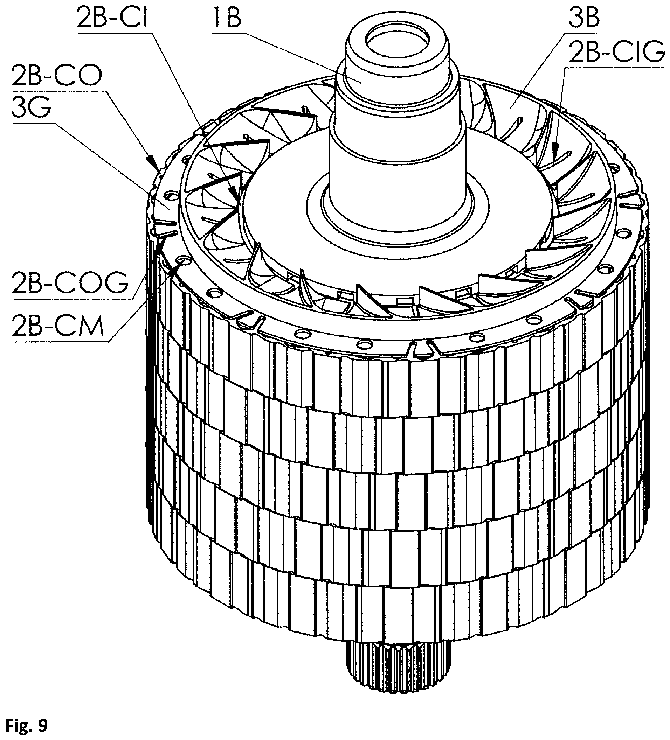

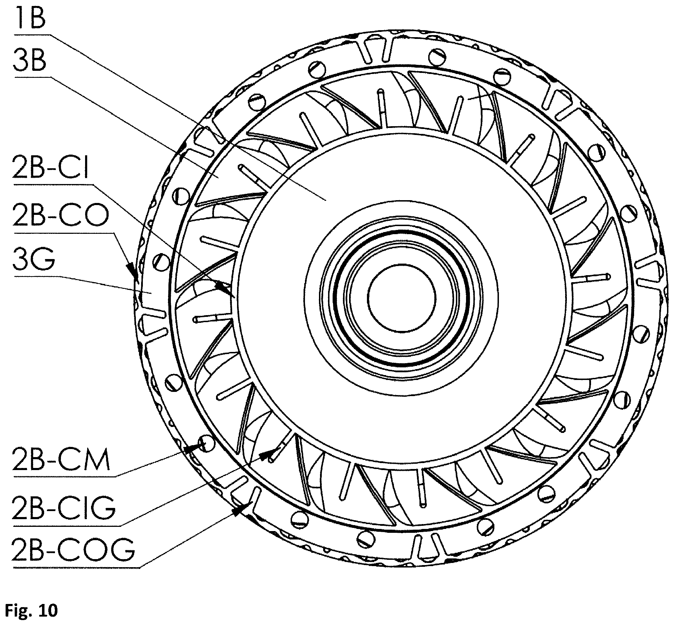

In more particular, as shown on Figs. 5 and 6, the size and/or location of the manifold 3 on the front surface of the stack is limited by required clamping areas provided by the stack 2 or the shaft surface in axial and/or radial direction. Accordingly, as shown on Figs. 5 and 6, the surface area of the manifold 3G being in contact with front surface of the first stack 2 is indicated with dashed circles, indicating the manifold outer contour 3G-OC, hence representing the outer manifold diameter 3G-OD, and inner manifold diameter 3G-ID respectively, wherein overlapping of the manifold 3G area with magnet slots 24 and fixation slots 23 for single shot overmolding is advantageously clearly visible. However, for majority of the cavities within the stack 2 to be overmolded, the minimum overlapping of target area and/or contours is easy to be maintained, wherein for some small cavities, in particular those extremely close to the outer peripheral edge of the stack 2, at least a portion of the target contour must overlap, thus minimum overlapping surface area 3-OLm is in range between 0,03mm^2 and 3mm^2, wherein exact values is dependent on the filler size within the resin 3. Furthermore, the clamping surface on the outer peripheral edges of the rotor core is limited by outer diameter of the stack 2-OD. The outer contour of the sheet for high performance rotor core comprises a plurality of grooves and/or notches, as visible on Figures 1-13. For this reason, the clamping surface area in advantageous embodiment is simplified to match the circular shape for sake of reducing the complexity and thus the costs of manufacturing the tool used for overmolding utilization, wherein the offset outer distance 2B-COd is in the range between 0,2mm and 50mm, preferably 1mm. In contrast, in alternative embodiment, the outer contour of a die, used to provide and apply the clamping force to the front surface of the stack 2 can also match the offset contour of the first stack peripheral edge, where minimum offset distance 2B-COdm is preferably in the range equal to the offset outer distance 2B-COd. The clamping surface is limited by the area of the manifold 3G also in radial direction, towards the central axis CA, where the clamping area is limited by the inner diameter of the stack 2, and/or by the outer diameter of the shaft feature, more precisely, by the outer diameter of supporting body 1B-OD. In alternative embodiment, where clamping surface is not limited by the features of the shaft (i.e. coolant outlet apertures on the supporting body 1B) the clamping surface might be provided also on the surface of the shaft, wherein the offset inner distance 2B-Cld is in the range between 0,2mm and 50mm, preferably 2mm.

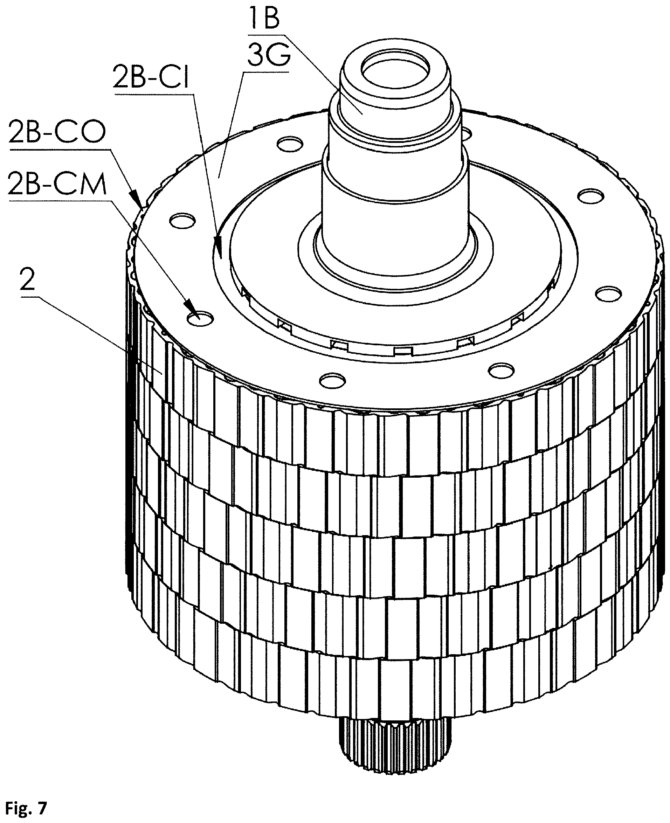

In Figs. 7-10, an alternative embodiments of manifolds 3G are shown.

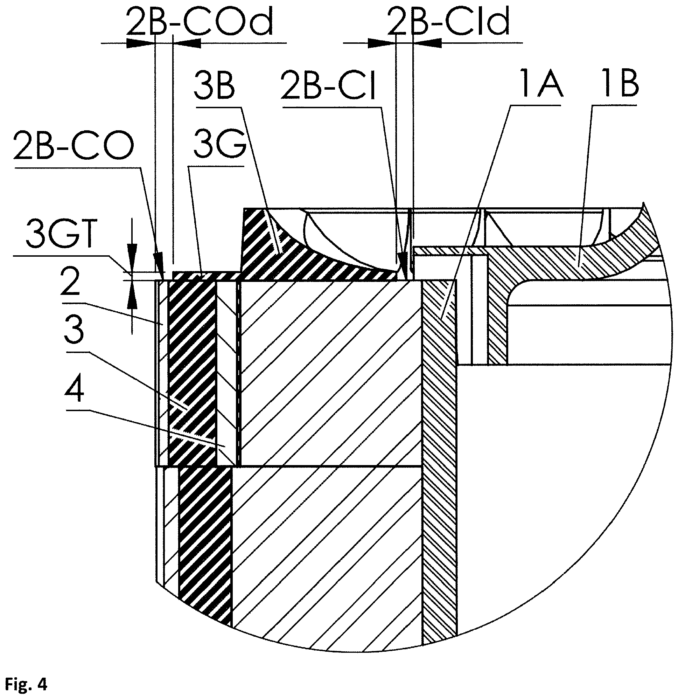

In Fig. 7, as contrast to other alternative embodiments, the manifold 3G comprises a simple flat cavity being in shape of a ring imprinted onto the front surface of first stack 2, wherein the thickness of the manifold 3GT base structure as shown on Fig. 4, is in the range between 0,2mm and 50mm. In shown alternative embodiments, the clamping surface on the front surface of first stack 2 comprises the additional areas, comprising the plurality of an outer grooves 2B-COG, and/or a central apertures 2B-CM, and/or and inner grooves 2B-CIG.

In Figs. 1-4, 8-10, 12 and 13, it can be seen, that the rotor, more precisely the first stack 2 on side of the supporting body 1B comprises the cavity of impeller 3B as part of the manifold 3G cavity for injecting the resin 3 into the rotor core, wherein the rotor, more precisely the first stack 2 on the side of the shaft core 1A, similarly comprises a second impeller 3A, wherein the resin in cavity of impeller 3B and the resin in cavity of second impeller 3B are connected with the resin 3 in cavities within the rotor core, as shown on Figs. 3, 4 and 9, and as advantageously proposed by invention.

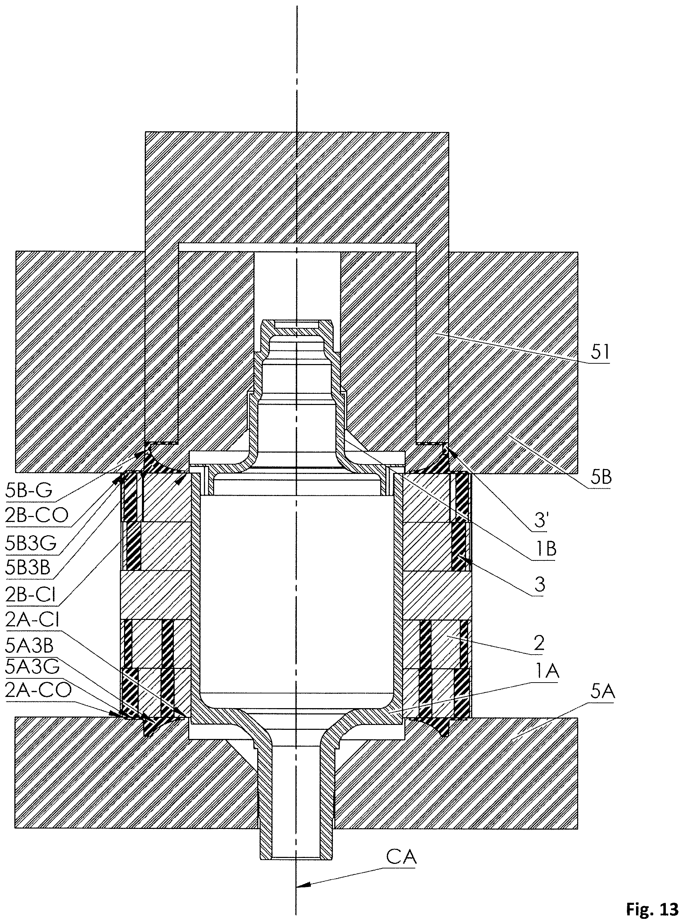

Figs. 12 and Fig 13 show sectional views of the rotor situated within the representative tool, indicating first clamping plate 5A and second clamping plate for providing a clamping load applied to the rotor core once being installed into the tool, wherein the rotor is aligned within the tool by transitional fit in area of the bearing's seats on the shaft. In Fig. 12 the resin 3 is shown in a state prior injecting the resin into the manifold 3G and rotor core cavities. In Fig. 13 the resin 3 is shown in a state after the resin was injected into the manifold 3G and rotor core cavities, wherein for sake of clarity the following items are indicated: gate 5B-G through which the resin 3 is injected into the manifold 3G by axial movement of the plunger 51; a first manifold tool cavity 5A3G, a first impeller tool cavity 5A3B, a second manifold tool cavity 5B3G, and a second impeller tool cavity 5B3B respectively. Furthermore, a remaining amount of resin 3' in the gates and within the cylinder is indicated for easier understanding.

All parts of the rotor and tool, in particular the impeller in function of the manifold 3G within the description is shown and describer in best mode embodiment. However, deviating shapes/sizes/distributions are also conceivable.

## Claims

1. Rotor for an electric motor,
- wherein the rotor comprises a shaft and a rotor core, the rotor core further comprising an adjacent front surface, a plurality of apertures and/or cavities protruding along the rotor core body, a plurality of magnets (4), and a resin (3) for fixation of the magnets within the rotor core,
**characterized**
- **in that** a manifold (3G) of resin (3) is formed on the front surface of the rotor core wherein the manifold (3G) is at least partially overlapping with plurality of target apertures and/or cavities;
- **in that** the manifold (3G) is bonded and/or restrained by the resin (3) to the front surface of the rotor core.

2. Rotor according to claim 1,
**characterized**
- **in that** the manifold (3G) comprises a plurality of blades spaced apart from each other and together form a first/second impeller of the rotor.

3. Method of manufacturing a rotor, particularly a rotor according to claim 1 or 2, for an electric motor, the rotor comprising a shaft, a rotor core, a plurality of magnets (4), and a resin (3), the rotor core further comprising an adjacent front surface with a plurality of apertures and/or cavities,
- wherein the method comprises a process of injecting the molten resin (3) into the rotor core apertures and/or cavities for fixation of the magnets (4) in the rotor core,
- wherein a die and/or a tool for injecting the resin (3) is used to limit the space surrounding the rotor core by providing a closed cavity on the front surface of the rotor core,
**characterized**
- **in that** the process of injecting the molten resin (3) comprises a distribution of the molten resin (3) within a cavity of a manifold (3G) on the front surface of the rotor core prior to the resin (3) is introduced into the apertures and/or cavities of the rotor core, wherein the molten resin (3) is distributed within the manifold (3G) among the overlapping apertures and/or cavities on the front surface of the rotor core by a principle of pressure distribution, until the cavity enclosed by the tool is filled with the resin (3).

4. Method according to claim 3,
**characterized**
- **in that** the process of distribution of the resin (3) within the manifold (3G) comprises the process of manufacturing the blades of the fan and/or impeller by filling up the cavity of the manifold (3G) within the die of the tool with the resin (3).
